# EUROPEAN PATENT SPECIFICATION

(11) **EP 3 250 762 B1**
(45) Date of publication and mention of the grant of the patent: **22.05.2019**
(21) Application number: 16713614.2
(22) Date of filing: 27.01.2016
(51) Int. Cl.: E02B 9/08, F03B 17/06

(54) **SYSTEM FOR GENERATING ELECTRICAL ENERGY FROM WATER CURRENTS**
SYSTEM ZUR ERZEUGUNG ELEKTRISCHER ENERGIE AUS WASSERSTRÖMUNGEN
SYSTÈME DE GÉNÉRATION D'ÉNERGIE ÉLECTRIQUE À PARTIR DE COURANTS D'EAU

(30) Priority: 27.01.2015 NL 2014196
(43) Date of publication of application: 06.12.2017
(73) Proprietor: BAM International B.V., 2595 AK 's-Gravenhage (NL)
(72) Inventor: HOOGEVEEN, Andreas, 3542 DA Utrecht (NL); BITTER, Johan George Albert, 3542 DA Utrecht (NL)
(74) Representative: Algemeen Octrooi- en Merkenbureau B.V.
(86) International application number: PCT/NL2016/050063
(87) International publication number: WO 2016/122319

(56) References cited:
- WO-A1-2005/061887
- WO-A2-2010/002778
- WO-A2-2014/136134
- US-A1- 2013 026 762

## Description

The present invention relates to a floating bridge for connecting two bodies of land separated from each other by a waterway comprising a system for generating electrical energy from water currents, such as in particular tidal currents.

WO 2014/064067 A1 describes a floating system. Said system comprises three floating bodies arranged in a triangle. The three floating bodies are interconnected by means of rods. Between the floating bodies, the system further comprises a base, which is connected to the floating bodies, likewise by means of rods. Suspended from said base is a downwardly extending mast, at the lower end of which a turbine unit is provided, which turbine unit comprises two concentric rotor bodies that rotate in opposite directions.

In GB 2,481,365 A the use of a bridge between bodies of land is suggested. The bridge is supported on piers. Between the piers, turbine units are provided below the water surface.

The above prior art systems have been found not to be suitable for economically sound large-scale use.

WO 2014/136134 A2 describes a so-called modular floating pier. The pier comprises a number of modules A, which are connected together to form an elongate pier. Each pier comprises a platform and, under said platform, a floating water wheel which partially projects above the water surface. The water wheels are designed to rotate under the influence of a water current in the longitudinal direction of the pier. Optionally it is suggested to use pairs of interconnected elongate floating bodies provided under two adjacent platforms, to which they are connected via ball bearings in the area between the two platforms in question. The floating bodies that are used extend in the longitudinal direction of the pier, on the two opposite longitudinal sides thereof, and the two waterwheels associated with the two platforms are positioned between the two floating bodies. The pier is not suitable for being used for extracting energy from water currents perpendicular to the longitudinal direction of the pier. Nor is the pier as described suitable, for the same reason, for being oriented perpendicular to a coastline or for use as a base for the construction of a bridge.

US 2013/0026762 A1 describes a hydrokinetic water turbine comprising two pontoon assemblies. Each of the two pontoon assemblies comprises two spaced-apart floating pontoons that support a frame, which frame in turn supports a water turbine. The pontoon assemblies can be interconnected.

WO 2010/002778 A2 describes a system as referred to in the introductory paragraph. More specifically, it describes a pontoon system comprising three parallel interconnected pontoons, between each pair of two adjacent pontoons an energy conversion device is provided, which energy conversion devices are suspended from the two adjacent pontoons in question via connecting elements.

The object of the invention is to provide the system which is more suitable for being used on a large scale in an economically sound manner and which provides, whether or not in special embodiments thereof, a solution, or at least an improvement as regards the aforesaid drawbacks of prior art systems. In order to achieve that object, a floating bridge according to claim 1 is provided. The floating bridge comprises a system for generating electrical energy from water currents, such as in particular tidal currents, that comprises a number of interconnected units arranged in line with each other. Because of the use of interconnected units, each comprising at least three floating bodies, there is no need to rigidly or non-rigidly connect these units, or at least each one of said units, to the bottom of the water reservoir, which leads to a significant reduction of the cost price. The connecting means ensure that the interconnected units can remain at a desired position to a sufficient degree. The connecting means can be of relatively simple design, in spite of the use of at least two turbine units for each unit. Furthermore, the system can be used on a large scale partially because of the aforesaid use of at least two separate turbine units for each unit. The scale increases as the number of turbine units increases. Designing the system as an elongate unit comprising the interconnected units makes it readily possible to provide the system in a desired length, wherein moreover additional functionality can be added in a simple manner, for example in the case of connecting two bodies of land separated by a waterway to the system, using a bridge of which the system could form part.

The connecting means may be configured for movably connecting the system to the aforesaid at least one anchoring means over a predetermined distance at least in vertical direction. Said predetermined distance is limited by a maximum dimension in vertical direction of the connecting means.

According to the invention, adjacent units are connected for pivoting, viz. omnidirectional movement relative to each other. In this way a difference in orientation relative to each other, for example caused by wave motion of the water in the water reservoir, such as a sea, can be efficiently offset. In one embodiment, the pivot is configured to allow a maximum pivoting movement about the pivot axis through an angular range of 0.5 - 5 degrees. When connected for omnidirectional movement, for example by means of a ball joint, the interconnected units can pivot relative to each other in two or possibly three directions, at least to a certain extent, enabling them to follow the movements of the water surface. It is in particular important in that regard that pivoting be possible about an axis that extends parallel to the longitudinal direction of the units, so that the units can twist relative to each other, as it were. The interconnected units will thus no longer behave as a rigid whole.

The units may be interconnected via connecting elements provided on facing sides of outer floating bodies associated with two respective interconnected units. The term "outer floating body" is understood to mean a floating body that is provided at the end of the row of floating bodies that form part of a unit.

It may further be advantageous if the width of the outer floating bodies, viewed in the longitudinal direction of a unit, is smaller than, for example half the width of the at least one floating body that is located between the outer floating bodies. The outer floating bodies located adjacent to each other of interconnected units located adjacent to each other thus jointly have more or less the width of an intermediate floating body, and can thus have a comparable buoyancy. In addition, the spacing between adjacent turbine units associated with interconnected units located adjacent to each other can remain more or less the same.

In the case of adjacent units being connected at one position, for example via a ball joint, it is relatively easy to create a situation in which interconnected units can move about more than one axis relative to each other, which better enables them to follow the wave motion, which can be important in particular in the case of strong currents and severe weather conditions, for example on open water.

The cost price and/or the cost of ownership of the system can be reduced if turbine units, preferably all turbine units, of interconnected units are electrically interconnected.

The cost of ownership can be further reduced and the reliability of the system can be enhanced if screening elements that extend between interconnected units are provided, in the interior of which screening elements electrical lines that connect turbine units of interconnected units are provided, in which connection it is additionally advantageous if each unit has at least one casing element against which the screening elements abut and in the interior of which the electrical lines are provided.

According to the invention, a driving deck extends over the multitude of units and the first and the second land connecting element, the driving deck being supported by the frames of the elongate units. Depending on the specific use, such a driving deck can be used for various purposes. The driving deck can for example be used for enabling staff to readily move along the length of the unit, in particular using a mobile vehicle, for example for carrying out required maintenance on one of the at least two turbine units. The driving deck can be used for the same function but also for enabling members of the public to cross the water reservoir in question. A toll might be levied in that case, which would further improve the economic conditions under which the system can be operated.

It may be advantageous if the connecting means comprise connecting elements that extend at an incline in use. Thus, movement of the at least one unit along with the motion of the water surface can be realised in a simple and effective manner.

To obtain a robust anchorage of the system it is advantageous if the connecting means are configured to connect each unit of the at least one unit of the system to the bottom of the water reservoir. In one embodiment it is conceivable for the system to comprise a multitude of the aforesaid units, wherein one or a number of said multitude of units is connected indirectly, via another one of the multitude of units, to the bottom via the connecting means.

It is advantageous if the connecting elements are configured to connect a unit to the bottom of the sea or the ocean via at most two anchoring means in the bottom.

In one embodiment it is advantageous if the connecting elements comprise flexible hauling elements, such as hauling cables, which each extend between an anchoring means and a unit.

In one embodiment it is advantageous if the connecting elements are rigid, for example in the form of a connecting beam that may be made up of a truss structure, and each extend between an anchoring means and a unit and are each connected to the anchoring means for pivoting, for example omnidirectional, movement at one end, and are each connected to a unit for pivoting, for example omnidirectional, movement at the opposite end.

It is advantageous if the connecting means are configured to attach an elongate unit to respective anchoring means only at at least one of the two opposite ends of the unit.

It is further advantageous if the connecting means are configured to enable pivoting of the turbine units relative to the frame, for which purpose the system further comprises driving means for pivoting the turbine units.

It is advantageous in that connection if the system comprises control means which are configured to control the driving means in such a manner that if the amount of electricity that is being generated or at least is about to be generated by a turbine unit exceeds a specified threshold value, the turbine unit will be pivoted such that the amount of electricity being generated by the turbine unit will decrease. In this way overloading of the turbine unit and/or the need to gear the capacity of the turbine unit to incidental situations in the case of exceptionally strong currents is/are prevented. This would make the turbine unit relatively costly.

It is advantageous within this framework if the connecting means are configured to enable pivoting of the turbine units about an at least substantially vertical pivot axis.

It is further advantageous if the connecting means are configured to enable the turbine units to pivot about an at least substantially horizontal pivot axis, which is for example located at the frame and which extends in the longitudinal direction of the frame.

If the at least three floating bodies form part of the frame, a robust structure can be obtained.

It is advantageous if the at least one unit is located in the water reservoir at some distance from land adjacent to the water reservoir.

In a possible embodiment, the frame has two girders that extend parallel to each other in the longitudinal direction of the unit, which girders are connected by the at least three floating bodies.

It is advantageous in that case if the spacing between the two parallel girders is at least approximately the same as the spacing between two adjacent floating bodies of the at least three floating bodies, as a result of which an at least approximately square space, at least viewed from above, is defined between the two respective girders and said two adjacent floating bodies.

According to another possible embodiment, the connecting means are connected to a first one of the two girders, such that the turbine units can pivot upward about the aforesaid horizontal pivot axis to an inactive position in which at least the rotor body is located in a space defined between the two girders and two adjacent floating bodies. A circle described by the rotor blades of the rotor bodies is in that case for example selected so that it falls within the square space, for example precisely within the square space. In this way a relatively compact construction is obtained, which is stable also in the inactive position of the turbine units.

It is moreover advantageous if the bridge comprises a portion which is provided between two units of the multitude of units and which can be opened such that a passage for vessels can be realised.

The present invention will now be explained in more detail by means of a description of possible embodiments of systems according to the invention, in which reference is made to the following figures, in which:
Figure 1a is a front view of a unit of a possible embodiment of a system for the floating bridge of the present invention;
Figure 1b is a top plan view of a unit according to figure 1a in another operating position;
Figure 2 is a three-dimensional view of a part of the unit shown in figure 1a;
Figure 3a is a three-dimensional view of the unit of figure 1a in use;
Figure 3b is a three-dimensional view of a possible embodiment of a fixing construction for a unit for the floating bridge of the invention;
Figure 4 is a schematic side view of the unit shown in figure 1a;
Figure 5a shows an alternative embodiment of a unit, or at least of parts thereof, of an embodiment of a system for the floating bridge of the present invention;
Figure 5b is a three-dimensional view of the unit of figure 5a in use;
Figure 5c is a schematic side view of the unit of figure 5a;
Figure 6 is a top plan view of a possible embodiment of a system for the floating bridge of the invention comprising a multitude of units according to figure 1a;
Figure 7 shows another possible embodiment of a system for the floating bridge of the present invention;
Figure 8 is a three-dimensional view of a possible embodiment of a floating bridge according to the invention comprising a system with units according to figure 1a;
Figures 9a, 9b are a top plan view and a front view, respectively, of the system according to figure 8; and
Figure 9c shows a part of the system of figure 9a in another operating position.

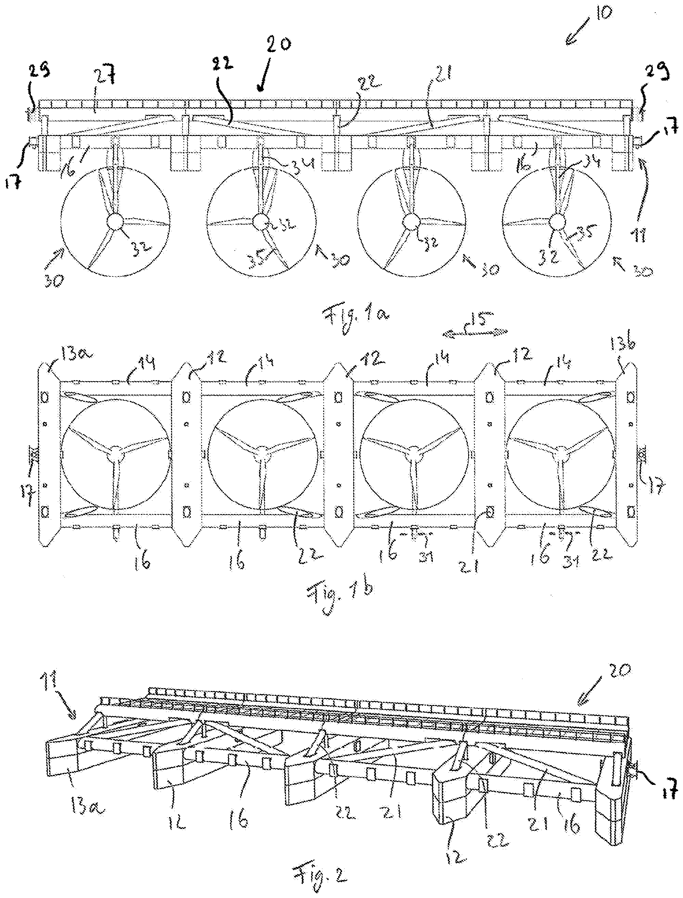

The invention relates to a floating bridge including a system for generating electrical energy from water currents, such as in particular tidal currents. The system to that end comprises a number of elongate units interconnected in a row, one unit 10 of which is shown in figures 1a, 1b and 2. The unit 10 is essentially made up of a frame 11, which comprises five floating bodies 12, 13a, 13b. The floating bodies 12, 13a, 13b are provided at regular intervals in a row and are rigidly interconnected by means of elongate tubular frame members 14, 16. A floating body 13a located at a first end of the unit 10 is connected to a floating body 12 via a frame member 14 and a frame member 16. The frame members 14, 16 are arranged in spaced-apart, parallel relationship. In an analogous manner, a floating body 13b, which is connected to a floating body 12 in the same manner, i.e. via a frame member 14 and 16, is provided at the opposite second end of the unit 10. Provided between the aforesaid floating bodies 12 connected to the floating bodies 13a and 13b, respectively, is a middle floating body 12, which in turn is also connected to its respective adjacent floating bodies 12, via frame members 14 and 16, on either side thereof. In general it can be stated, therefore, that a unit 10 as shown in figure 1a comprises two outer floating bodies 13a, 13b and three, at least in the present example, inner floating bodies 12 therebetween.

The aforesaid frame members 14 extend in line with each other, thus forming a girder of the unit 10 that extends from the floating body 13a at one end to the floating body 13b at the other end. The same applies as regards the frame members 16. As is shown in particular in figure 1b, an intermediate distance between the frame members 14 and 16 is approximately the same as the intermediate distance between two adjacent floating bodies 12, 13a, 13b. In this way a truss-like frame 11 is formed from the aforesaid floating bodies 12, 13a, 13b and the girders comprising frame members 14, 16. As is also shown in particular in figure 1b, a dimension of the floating bodies 13a, 13b in a longitudinal direction 15 of the unit 10 is about half that of the floating bodies 12. Using connecting elements 17 configured as omnidirectional ball joints, the unit 10 can be connected to further units 10, which may be configured identically, to form a row. In this way a chain of interconnected units 10 is formed, in which a respective floating body 13 of a first unit connects to a respective floating body 13b of a second unit.

Figure 2 shows a part of the unit 10 shown in figures 1a and 1b. As is in particular shown in figure 2, a driving deck 20 is mounted on top of the above-described frame 11 of floating bodies 12, 13a, 13b and frame members 14 and 16. Said driving deck 20 is supported on the frame 11 via support arms 21 and 22 and tubes 27, 28 that are connected to the upper ends of the support arms 21, 22. Bellows couplings 29 are provided at the ends of the tubes 27, 28. When a number of units 10 are connected together in succession as described above, a continuous driving deck is realised, whilst also the tubes 27, 28 are continuous on account of the bellows couplings 29. The driving deck 20 is omitted from the top plan view of fig 1b for the sake of clarity. Figure 1b does show, however, parts of the support arms 21 and 22 which are cut through (at least in the figure) in horizontal direction.

The total length of the unit 10 is about 100 m, that is, the distance apart between at least the centres of the respective adjacent floating bodies 12, 13a, 13b is about 25 m. The floating bodies 12, 13a, 13b are made of steel, but alternatively they may also be made of other materials, such as concrete. They may be hollow so as to give the unit 10 sufficient buoyancy. The frame members 14, 16 are hollow steel tubes. As described above, respective pairs of adjacent floating bodies are connected together by means of a frame member 14 and 16, but in an alternative embodiment the unit 10 may also comprise two girders which form two or more of the frame members 14 or 16 and which thus extend over several floating bodies.

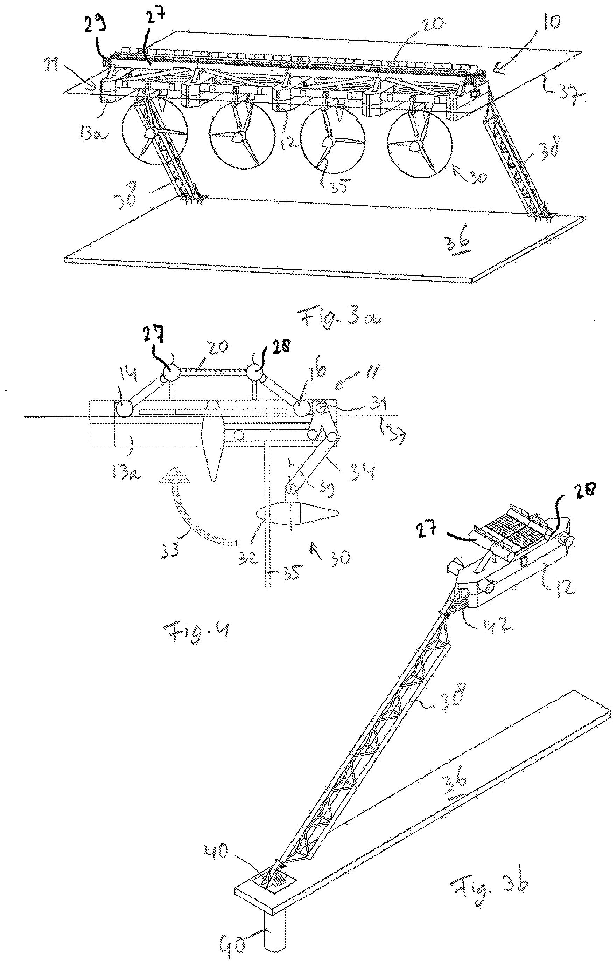

In the embodiment of the unit 10 according to figures 1a and 1b, a turbine unit 30 is provided on each of the frame members 16, centrally between the floating bodies of each pair of two adjacent floating bodies. Each turbine unit 30 has a rotor body 32 comprising three rotor blades 35 which are connected to a frame member 16 of the frame 11 by connecting means in the form of an arm 34. The arm is pivotally connected to the frame 11 about a pivot axis 31 extending in the longitudinal direction 15, such that the turbine units 30 can be pivoted from an operating position, in which the arm 34 extends obliquely downward as shown in figure 4, to an inactive position as shown in figure 1b, in which the arm 34 extends horizontally, or in other words, approximately parallel to the water surface. As figure 1b and also figure 4 show, at least the rotor body 32 is located above the water surface in the inactive position so as to facilitate maintenance work on the turbine units 30. In figure 3a the unit 10 is shown in an operating position, in which the water surface is symbolically represented by the plane 37. A bottom of the water reservoir, for example a sea, in which the unit is floating is symbolically represented by the plane 36. In figure 3a the turbine units 30 are drawn both in the active position and in the passive position. The same applies to figure 4. Figure 4 in particular clearly shows how the turbine unit 30 pivots upward in the direction indicated by arrow 33 from the active position, in which the rotor blades 35 extends in an approximately vertical plane, to the passive position, in which the rotor blades 35 extend parallel to and just above the water surface 37.

Figures 3a and 3b further show a fixing construction by means of which a unit 10, or a succession of interconnected units 10, can be anchored to the seabed 36. Connecting beams 38, which form connecting means, are for that purpose provided for connecting a unit 10 to the seabed 36. To that end a floating body of the unit 10 is connected to each connecting beam 38. As figure 3a shows, a floating body 13a, 13b is used for this purpose. As the example of fig 3b shows, it is also possible to use a floating body 12 for that purpose. Fixed to the seabed is an anchoring element 40, which is pivotally, for example omnidirectionally, connected to the connecting beam 38. The floating body 13a, 13b (or 12 according to figure 3b) is provided with a fixing element 42, to which the connecting beam 38 is pivotally, for example omnidirectionally, connected. If use is made of a system comprising several interconnected units 10, one connecting beam for each unit 10 will suffice, which connecting beam is for example connected to a respective floating body 13a of a unit 10. It is noted that from a practical point of view the anchoring construction comprising connecting beams 38 is advantageous up to water depths of a few dozen metres, up to about 60 m at most.

Each one of the turbine units 30 of the unit 10 is pivotable about a vertical pivot axis 39 so as to be adjustable relative to the exact direction of the water current past the system. Rotation means may be provided for changing the orientation of the turbine units 30 about the aforesaid vertical pivot axis 39 in dependence on an output signal from current measuring device such as, for example (but not exclusively), an Acoustic Doppler current profiler.

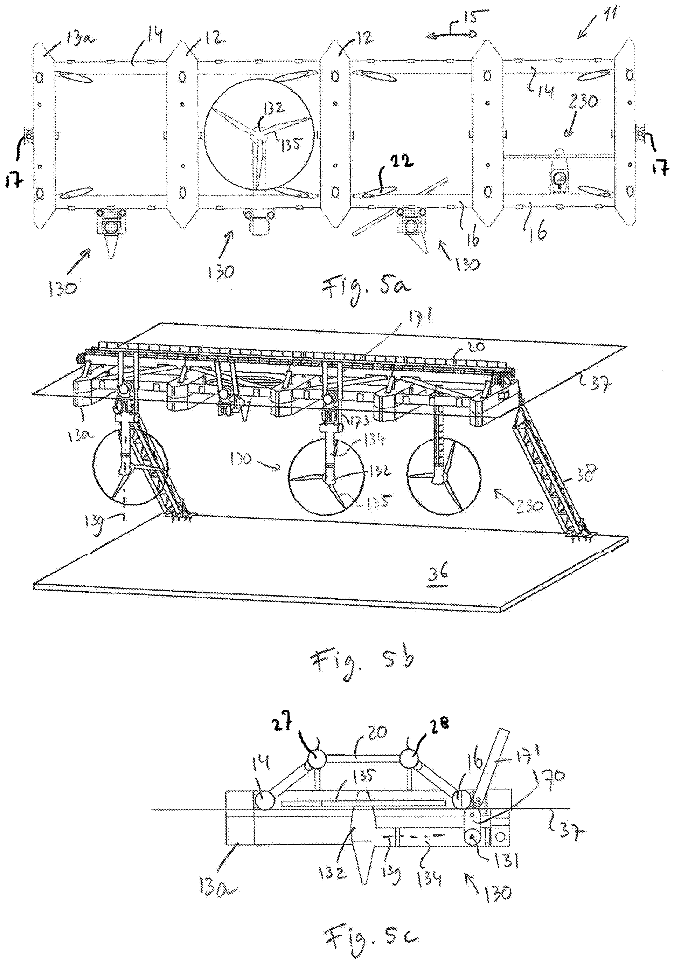

Figures 5a - 5c show examples of alternative turbine units 130, 230 and ways in which said turbine units are connected to the frame 11 of a unit as described above. The frame 11 shown in figures 5a-5c is thus the same as the frame 11 of the unit 10. Each turbine unit 130 has a rotor body 132 comprising three rotor blades 135, which are connected to a frame member 16 of the frame 11 by connecting means in the form of arm 134. The arm 134 is pivotally connected to the frame 11 about a pivot axis 131 extending in the longitudinal direction 15, such that the turbine units 130 can be pivoted from an operating position, in which the arm 134 extends vertically, or in other words, perpendicularly to the water surface 37, to an inactive position in which the arm extends horizontally, or in other words, substantially parallel to the water surface. In figures 5a and 5b, the first and the third turbine unit 130, viewed from the left, are in the active position, and the second turbine unit 130 is in the inactive position. As figure 5c shows, at least the rotor body 132 is located above the water surface 37 in the inactive position so as to facilitate maintenance work on the turbine units 130. The rotor body 132 of the turbine units 130 is rotatable about an axis of rotation 139 that is coaxial with the central axis of the arm 134. In this way the position of the rotor blades 135 can be adjusted to the direction of flow of the water. As figure 5a shows, the rotor blades 135 of the third turbine unit 130 (viewed from the left in figure 5a) have rotated through an angle of about 35 degrees about the axis of rotation 139.

The pivoting of the arm 134 of the turbine units 130 about the pivot axis 131 is effected by hydraulic means. Two hydraulic cylinders 171 are to that end provided for each arm 134, which cylinders or at least a cylinder portion thereof, are connected to the frame 11. The piston 173 thereof is connected to a cam 170. The cam 170 is fixedly connected to the arm and pivots along with the arm 134 about the pivot axis 131. Upon extension of the piston 173 from the inactive position shown in figure 5c, the cam 170 is pivoted in anti-clockwise direction about the axis 131, so that also the arm 134 will make a corresponding pivoting movement. As a result, the turbine unit is moved to the active position thereof.

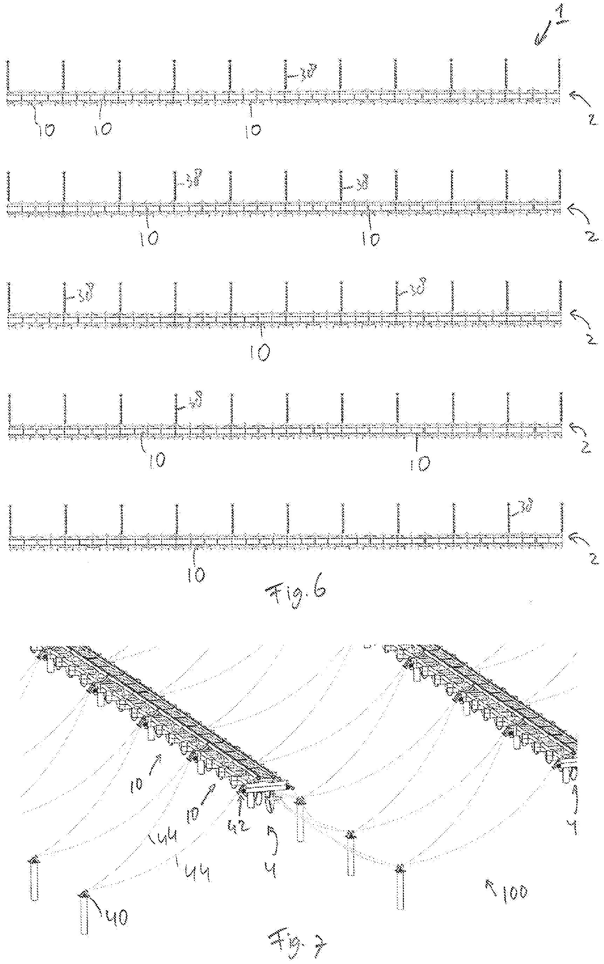

Figure 6 shows a possible embodiment of a system 1 comprising a multitude of the above-described units 10. The system 1 comprises five rows 2 (at least in the present example) comprising a succession of ten units 10 which are interconnected in the above-described manner via connecting means 17. Each unit 10 is connected to the seabed by means of a connecting beam 38. The connecting beam 38 of each unit is connected to the floating body 13a, and also, at the outermost unit of each row, on the right in figure 6, to the floating body 13b. That is, 11 connecting beams 38 are needed for anchoring 10 units 10 to the seabed. The five rows 2 are spaced about 250 m apart. All the turbine units 30 of the units 10 of said row 2 are electrically interconnected. The five rows 2 are likewise electrically interconnected. The electrical lines that are needed for the aforesaid electrical connections extend via the tubes 27, 28 and the bellows couplings 29 that connect the tubes 27, 28 of adjacent units 10. Said electrical lines are thus fully screened from water and wind. The bellows couplings 29 are capable of following the movements relative to each other of adjacent units 10 by pivoting about the ball joint 17. Beside electrical lines also other electrical components, such as transformers, converters, control panels and cooling systems can be screened from wind and weather, for example by housing them in one or a number of floating bodies 12, 13a, 13b. It is furthermore possible to provide such components in groups for a number of turbine units, so that such components are not provided separately for each turbine unit.

Provided on one of the rows 2 is a basic connection for electrically connecting the system 1 to a consumer of electrical energy or to a transmission element, such as a transmission line, for electrical energy. The transmission line may advantageously float on the water surface. Electrical connections are not shown in the figures.

Figure 7 shows an alternative embodiment of at least a part of a system 100 likewise comprising five rows 4 of ten units 10 each, analogously to the situation shown in figure 6. In this case the units 10 are each connected to anchorages 40 in the seabed via anchoring cables 44. Two anchoring cables 44 instead of one connecting beam 38 are connected to each fixing element 42 on each unit 10, and consequently two anchoring cables 44 are also connected to each anchorage 40 in the seabed. In such a way, a system according to the invention can also be advantageously used in deeper waters in comparison with the system 1 of figure 6, which makes use of connecting beams 38.

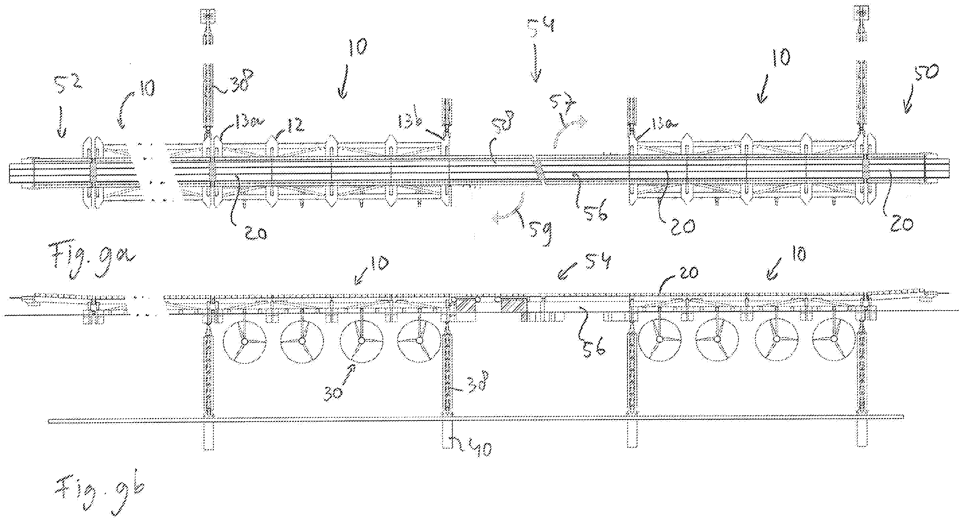

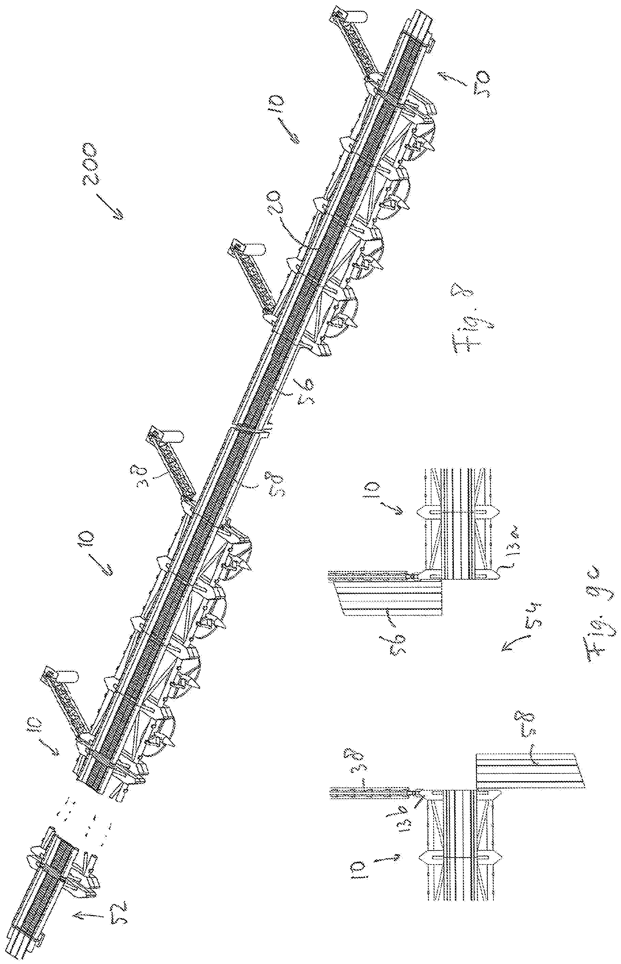

Figure 8 shows a possible embodiment of a floating bridge according to the present invention. The bridge 200 comprises a number of interconnected units 10, two units of which are shown in their entirety in figures 8 and 9a and 9b. The bridge 200 further comprises a first land connecting element 50 at a first end of the bridge 200. The land connecting element 50 is connected to the right-hand (at least in figure 9a) unit 10. The driving deck 20 extends over all the units 10 and also over the land connecting element 50. In this way the bridge 200 can function as a footbridge, for example, or a bridge for vehicles such as passenger vehicles and trucks or trains, depending on the dimensions of the driving deck 20, among other things. At the opposite end of the bridge 200, on the left in figures 9a and 9b, a second land connecting element 52 is provided, which is likewise connected to a unit 10 (partially shown in figures 9a, 9b), over which land connecting element 52 the driving deck 20 likewise extends. The units 10 are connected to the seabed in the above-described manner via connecting beams 38 at the location of a floating body 13a and/or 13b.

Provided between the two units 10 of the bridge 200 that are shown in their entirety in figures 8-9b is a part 54 that can swing open. Said part comprises a part 56 which is connected to one of the two units 10 and which can swing open in the direction indicated by arrow 57 about a vertical pivot axis. Said part 54 also comprises a part 58 which is connected to the other of the two units 10 and which can swing open in the direction indicated by arrow 59, likewise about a vertical pivot axis. In such a way a passage, for example for vessels, through the bridge 200 is realised. An open position of the part 54 is shown in figure 9c. Figure 9c shows the parts 56 and 58 in the swung-open position. Swinging open the parts 56 and 58 takes place via hydraulic means, for example. Details are not shown in the figures.

## Claims

1. A floating bridge for connecting two bodies of land separated from each other by a waterway, the bridge comprising
- a system for generating electrical energy from water currents, such as in particular tidal currents, comprising a number of successive interconnected elongate units (10) which are arranged in line with each other such that a total length of the multitude of units substantially spans the waterway and adjacent units being connected, preferably at one position, for pivoting, viz. omnidirectional movement relative to each other, for example by means of a ball joint, the elongate units having at least three floating bodies (12, 13a, 13b) provided beside each other and parallel to each other in a row so as to enable the system to float on a water surface of a water reservoir such as a sea, an ocean, a river or the like, a frame (11) extending along the length of the elongate unit, of which the at least three floating bodies form part or to which they are at least connected, at least two turbine units (30) to be driven by water currents, each comprising at least one rotor body (32), connecting means (34; 134) for mechanically connecting each one of the at least two turbine units to at least one of the at least three floating bodies and/or to the frame, such that the rotor bodies are positioned completely under the water surface and, viewed from above, between two adjacent floating bodies, further connecting means (38; 44) for connecting the system to at least one anchoring means (40) that is connected to the bottom of the water reservoir, the connection being such that the at least one unit can move along with movements of the water surface such as for example caused by wave motion and tidal movement,
- a first land connecting element which connects a first end of the system to a first body of land,
- a second land connecting element which connects a second end of the system located opposite said first end to a second body of land, and
- a driving deck which extends over the multitude of units and the first and the second land connecting element, the driving deck being supported by the frames of the elongate units.

2. A floating bridge according to claim 1 wherein the units are interconnected via connecting elements (17) provided on facing sides of outer floating bodies associated with two respective interconnected units.

3. A floating bridge according to claim 1 or 2, wherein the width of the outer floating bodies (13a, 13b), viewed in the longitudinal direction of a unit (10), is smaller than, preferably is about half the width of, the at least one floating body (12) that is located between the outer floating bodies.

4. A floating bridge according to any one of the preceding claims, wherein turbine units, preferably all turbine units, of interconnected units are electrically interconnected.

5. A floating bridge according to claim 4, wherein screening elements that extend between interconnected units are provided, in the interior of which screening elements electrical lines that connect turbine units of interconnected units are provided wherein preferably each unit has at least one casing element against which the screening elements abut and in the interior of which the electrical lines are provided.

6. A floating bridge according to any one of the preceding claims, wherein the further connecting means comprise connecting elements that extend at an incline in use, wherein preferably the connecting elements are configured to connect a unit to the bottom of the water reservoir via at most two anchoring means in the bottom, and/or wherein the connecting elements comprise flexible hauling elements which each extend between an anchoring means and a unit, and/or wherein the connecting elements are rigid and each extend between an anchoring means and a unit and are each pivotally connected to the anchoring means at one end and to a unit at the opposite end.

7. A floating bridge according to any one of the preceding claims, wherein the further connecting means are configured to connect each unit of the at least one unit of the system to the bottom of the water reservoir.

8. A floating bridge according to any one of the preceding claims, wherein the further connecting means are configured to attach an elongate unit to respective anchoring means only at at least one of the two opposite ends of the unit.

9. A floating bridge according to any one of the preceding claims, wherein the connecting means are configured to enable pivoting of the turbine units relative to the frame about an at least substantially vertical pivot axis and/or to enable the turbine units to pivot about an at least substantially horizontal pivot axis, for which purpose the system further comprises driving means for pivoting the turbine units, the driving means preferably being configured to enable pivoting of the turbine units about an at least substantially vertical pivot axis and/or about an at least substantially horizontal pivot axis.

10. A floating bridge according to claim 9, wherein the system comprises control means which are configured to control the driving means in such a manner that if the amount of electricity that is being generated or at least is about to be generated by a turbine unit exceeds a specified threshold value, the turbine unit will be pivoted such that the amount of electricity being generated by the turbine unit will decrease.

11. A floating bridge according to any one of the preceding claims, wherein the at least three floating bodies form part of the frame.

12. A floating bridge according to any one of the preceding claims, wherein the frame has two girders that extend parallel to each other in the longitudinal direction of the unit, which girders are connected by the at least three floating bodies.

13. A floating bridge according to claim 12, wherein the spacing between the two parallel girders is at least approximately the same as the spacing between two adjacent floating bodies of the at least three floating bodies, as a result of which an at least approximately square space, at least viewed from above, is defined between the two respective girders and said two adjacent floating bodies.

14. A floating bridge according to claim 12 or 13, wherein the connecting means are connected to a first one of the two girders, such that the turbine units can pivot upward about the aforesaid horizontal pivot axis to an inactive position in which at least the rotor body is located in a space defined between the two girders and two adjacent floating bodies.

15. A floating bridge according to any of the preceding claims wherein the bridge comprises at least one portion which is provided between two units of the multitude of units and which can be opened such that a passage for vessels can be realised, wherein the at least one portion preferably is pivotally connected to a unit about a vertical pivot axis.

## Patentansprüche

1. Eine schwimmende Brücke zum Verbinden von zwei durch eine Wasserstraße voneinander getrennten Landkörpern, wobei die Brücke Folgendes umfasst:
- ein System zum Erzeugen elektrischer Energie aus Wasserströmen, wie insbesondere Gezeitenströmen, umfassend eine Anzahl aufeinander folgender, miteinander verbundener, länglicher Einheiten (10), die so in Reihe angeordnet sind, dass die Gesamtlänge der Vielzahl von Einheiten im Wesentlichen die Wasserstraße überbrückt und benachbarte Einheiten vorzugsweise an einer Position zum Verschwenken, d. h. zur omnidirektionalen Bewegung relativ zueinander verbunden sind, zum Beispiel mittels eines Kugelgelenks, wobei die länglichen Einheiten mindestens drei schwimmende Körper (12, 13a, 13b) aufweisen, die nebeneinander und parallel zueinander in einer Reihe angeordnet sind, um es dem System zu erlauben, auf einer Wasseroberfläche eines Wasserreservoirs wie einem See, einem Ozean, einem Fluss oder dergleichen zu schwimmen, wobei sich ein Rahmen (11) entlang der Länge der länglichen Einheit erstreckt, von der die mindestens drei schwimmenden Körper einen Teil bilden oder mit der sie mindestens verbunden sind, mindestens zwei durch Wasserströme anzutreibende Turbineneinheiten (30), die jeweils mindestens einen Rotorkörper (32), Verbindungsmittel (34; 134) zum mechanischen Verbinden von jeder der mindestens zwei Turbineneinheiten an mindestens einen der mindestens drei schwimmenden Körper und/oder an den Rahmen umfassen, so dass die Rotorkörper vollständig unter der Wasseroberfläche positioniert sind und, von oben betrachtet, zwischen zwei benachbarten schwimmenden Körpern, weitere Verbindungsmittel (38; 44) zum Verbinden des Systems mit mindestens einem Verankerungsmittel (40), die mit dem Boden des Wasserreservoirs verbunden sind, wobei die Verbindung so ist, dass sich die mindestens eine Einheit bei Bewegungen der Wasseroberfläche mitbewegen kann, wie sie beispielsweise durch Wellenbewegung und Gezeitenbewegung hervorgerufen werden,
- ein erstes Landverbindungselement, das ein erstes Ende des Systems mit einem ersten Landkörper verbindet,
- ein zweites Landverbindungselement, das ein zweites Ende des Systems gegenüber dem ersten Ende mit einem zweiten Landkörper verbindet, und
- ein Fahrdeck, das sich über die Vielzahl von Einheiten und das erste und das zweite Landverbindungselement erstreckt, wobei das Fahrdeck von den Rahmen der länglichen Einheiten getragen wird.

2. Schwimmende Brücke nach Anspruch 1, bei der die Einheiten über Verbindungselemente (17) miteinander verbunden sind, die an einander gegenüberliegenden Seiten von äußeren schwimmenden Körpern vorgesehen sind, die jeweils zwei miteinander verbundenen Einheiten zugeordnet sind.

3. Schwimmende Brücke nach Anspruch 1 oder 2, wobei die Breite der äußeren schwimmenden Körper (13a, 13b), gesehen in Längsrichtung einer Einheit (10), kleiner ist als vorzugsweise etwa die halbe Breite des mindestens einen schwimmenden Körpers (12), der sich zwischen den äußeren schwimmenden Körpern befindet.

4. Schwimmende Brücke nach einem der vorhergehenden Ansprüche, wobei Turbineneinheiten, vorzugsweise alle Turbineneinheiten, miteinander verbundener Einheiten elektrisch miteinander verbunden sind.

5. Schwimmende Brücke nach Anspruch 4, wobei Abschirmelemente, die sich zwischen miteinander verbundenen Einheiten erstrecken, vorgesehen sind, wobei im Inneren dieser Abschirmungselemente elektrische Leitungen vorgesehen sind, die Turbineneinheiten von miteinander verbundenen Einheiten verbinden, wobei vorzugsweise jede Einheit mindestens ein Gehäuseelement aufweist, gegen das die Abschirmelemente anliegen und in deren Inneren die elektrischen Leitungen vorgesehen sind.

6. Schwimmende Brücke nach einem der vorhergehenden Ansprüche, wobei die weiteren Verbindungsmittel Verbindungselemente umfassen, die sich im Gebrauch schräg erstrecken, wobei die Verbindungselemente vorzugsweise so konfiguriert sind, dass sie eine Einheit mit dem Boden des Wasserreservoirs über höchstens zwei Verankerungsmittel im Boden verbinden, und/oder wobei die Verbindungselemente flexible Transportelemente umfassen, die sich jeweils zwischen einem Verankerungsmittel und einer Einheit erstrecken, und/oder wobei die Verbindungselemente starr sind und sich jeweils zwischen einem Verankerungsmittel und einer Einheit erstrecken und jeweils schwenkbar mit dem Verankerungsmittel an einem Ende und mit einer Einheit am gegenüberliegenden Ende verbunden sind.

7. Schwimmende Brücke nach einem der vorhergehenden Ansprüche, bei der die weiteren Verbindungsmittel konfiguriert sind, um jede Einheit der mindestens einen Einheit des Systems mit dem Boden des Wasserreservoirs zu verbinden.

8. Schwimmende Brücke nach einem der vorhergehenden Ansprüche, wobei die weiteren Verbindungsmittel so konfiguriert sind, dass sie nur an mindestens einem der beiden entgegengesetzten Enden der Einheit eine längliche Einheit an dem jeweiligen Verankerungsmittel befestigen.

9. Schwimmende Brücke nach einem der vorhergehenden Ansprüche, wobei die Verbindungsmittel so konfiguriert sind, dass sie ein Verschwenken der Turbineneinheiten relativ zu dem Rahmen um eine zumindest im Wesentlichen vertikale Schwenkachse ermöglichen und/oder ein Verschwenken der Turbineneinheiten um eine mindestens im Wesentlichen horizontale Schwenkachse ermöglichen, wobei das System zu diesem Zweck ferner Antriebsmittel zum Verschwenken der Turbineneinheiten umfasst, wobei die Antriebsmittel vorzugsweise so konfiguriert sind, dass sie ein Verschwenken der Turbineneinheiten um eine zumindest im Wesentlichen vertikale Schwenkachse und/oder um zumindest eine im Wesentlichen horizontale Schwenkachse ermöglichen.

10. Schwimmende Brücke nach Anspruch 9, wobei das System ein Steuermittel umfasst, das so konfiguriert ist, dass es das Antriebsmittel so steuert, dass die Elektrizitätsmenge, die erzeugt wird oder zumindest von einer Turbineneinheit erzeugt werden soll, einem bestimmten Schwellenwert überschreitet, wobei die Turbineneinheit so geschwenkt wird, dass die von der Turbineneinheit erzeugte Elektrizitätsmenge abnimmt.

11. Schwimmende Brücke nach einem der vorhergehenden Ansprüche, bei der die mindestens drei schwimmenden Körper einen Teil des Rahmens bilden.

12. Schwimmende Brücke nach einem der vorhergehenden Ansprüche, wobei der Rahmen zwei Träger aufweist, die sich in Längsrichtung der Einheit parallel zueinander erstrecken, wobei die Träger durch die mindestens drei schwimmenden Körper verbunden sind.

13. Schwimmende Brücke nach Anspruch 12, wobei der Abstand zwischen den zwei parallelen Trägern mindestens annähernd gleich dem Abstand zwischen zwei benachbarten schwimmenden Körpern der mindestens drei schwimmenden Körper ist, wodurch ein mindestens annähernd quadratischer Raum, zumindest von oben gesehen, zwischen den zwei jeweiligen Trägern und den zwei benachbarten schwimmenden Körpern definiert ist.

14. Schwimmende Brücke nach Anspruch 12 oder 13, wobei die Verbindungsmittel mit einem ersten der zwei Träger verbunden sind, so dass die Turbineneinheiten um die vorgenannte horizontale Schwenkachse nach oben in eine inaktive Position schwenken können, in der sich mindestens der Rotorkörper in einem Raum befindet, der zwischen den zwei Trägern und zwei benachbarten schwimmenden Körpern definiert ist.

15. Schwimmende Brücke nach einem der vorhergehenden Ansprüche, wobei die Brücke mindestens einen Abschnitt aufweist, der zwischen zwei Einheiten der Vielzahl von Einheiten vorgesehen ist und der geöffnet werden kann, so dass ein Durchgang für Schiffe realisiert werden kann, wobei der mindestens eine Abschnitt vorzugsweise um eine vertikale Schwenkachse schwenkbar mit einer Einheit verbunden ist.

## Revendications

1. Pont flottant pour relier deux masses de terre séparées par une voie navigable, le pont comprenant
- un système de génération d'énergie électrique à partir de courants d'eau, tels que notamment des courants de marée, comprenant un nombre d'unités allongées reliées entre elles successives (10) qui sont agencées en ligne les unes avec les autres de sorte que la longueur totale de la multitude d'unités s'étende essentiellement sur la voie navigable et des unités adjacentes étant reliées, de préférence à une position, pour effectuer un mouvement pivotant, à savoir, omnidirectionnel les unes par rapport aux autres, par exemple au moyen d'un joint à rotule, les unités allongées ayant au moins trois corps flottants (12, 13a, 13b) prévus les uns à côté des autres et parallèlement les uns aux autres en rangée de manière à permettre au système de flotter sur une surface d'eau d'un réservoir d'eau tel qu'une mer, un océan, une rivière ou autre analogue, un cadre (11) s'étendant sur la longueur de l'unité allongée, duquel les au moins trois corps flottants font partie ou auquel ils sont au moins reliés, au moins deux unités de turbine (30) à entraîner par des courants d'eau, chacune comprenant au moins un corps de rotor (32), des moyens de liaison (34 ; 134) pour relier mécaniquement chacune des au moins deux unités de turbine à au moins l'un des au moins trois corps flottants et/ou au cadre, de sorte que les corps de rotor soient positionnés complètement sous la surface d'eau et, en vue de dessus, entre deux corps flottants adjacents, des moyens de liaison supplémentaires (38 ; 44) pour relier le système à au moins un moyen d'ancrage (40) qui est relié au fond du réservoir d'eau, la liaison étant telle que l'au moins une unité peut se déplacer avec des mouvements de la surface d'eau tels que par exemple ceux provoqués par le mouvement des vagues et le mouvement des marées,
- un premier élément de liaison de terre qui relie une première extrémité du système à une première masse de terre,
- un deuxième élément de liaison de terre qui relie une deuxième extrémité du système située en face de ladite première extrémité à une deuxième masse de terre, et
- une plateforme de roulage qui s'étend sur la multitude d'unités et les premier et deuxième éléments de liaison de terre, la plateforme de roulage étant supportée par les cadres des unités allongées.

2. Pont flottant selon la revendication 1, dans lequel les unités sont reliées entre elles par l'intermédiaire d'éléments de liaison (17) prévus sur des côtés opposés de corps flottants externes associés à deux unités respectives reliées entre elles.

3. Pont flottant selon la revendication 1 ou 2, dans lequel la largeur des corps flottants externes (13a, 13b), vue dans la direction longitudinale d'une unité (10), est inférieure à, de préférence est égale à environ la moitié de la largeur de l'au moins un corps flottant (12) qui est situé entre les corps flottants externes.

4. Pont flottant selon l'une quelconque des revendications précédentes, dans lequel les unités de turbine, de préférence toutes les unités de turbine, d'unités reliées entre elles sont reliées électriquement entre elles.

5. Pont flottant selon la revendication 4, dans lequel des éléments de protection qui s'étendent entre des unités reliées entre elles sont prévus, à l'intérieur de ces éléments de protection sont prévues des lignes électriques qui relient des unités de turbine d'unités reliées entre elles, où de préférence chaque unité a au moins un élément formant boîtier contre lequel les éléments de protection viennent en butée et à l'intérieur duquel les lignes électriques sont prévues.

6. Pont flottant selon l'une quelconque des revendications précédentes, dans lequel les moyens de liaison supplémentaires comprennent des éléments de liaison qui s'étendent sur un plan incliné en cours d'utilisation, où de préférence les éléments de liaison sont configurés pour relier une unité au fond du réservoir d'eau par l'intermédiaire d'au plus deux moyens d'ancrage au fond et/ou où les éléments de liaison comprennent des éléments de halage flexibles qui s'étendent chacun entre un moyen d'ancrage et une unité, et/ou où les éléments de liaison sont rigides et s'étendent chacun entre un moyen d'ancrage et une unité et sont chacun reliés en pivotement au moyen d'ancrage au niveau d'une extrémité et à une unité au niveau de l'extrémité opposée.

7. Pont flottant selon l'une quelconque des revendications précédentes, dans lequel les moyens de liaison supplémentaires sont configurés pour relier chaque unité de l'au moins une unité du système au fond du réservoir d'eau.

8. Pont flottant selon l'une quelconque des revendications précédentes, dans lequel les moyens de liaison supplémentaires sont configurés pour fixer une unité allongée à un moyen d'ancrage respectif uniquement au niveau d'au moins l'une des deux extrémités opposées de l'unité.

9. Pont flottant selon l'une quelconque des revendications précédentes, dans lequel les moyens de liaison sont configurés pour permettre le pivotement des unités de turbine par rapport au cadre autour d'un axe de pivotement au moins essentiellement vertical et/ou pour permettre aux unités de turbine de pivoter autour d'un axe de pivotement au moins essentiellement horizontal, à cet effet le système comprend en outre des moyens d'entraînement pour faire pivoter les unités de turbine, les moyens d'entraînement étant de préférence configurés pour permettre le pivotement des unités de turbine autour d'un axe de pivotement au moins essentiellement vertical et/ou autour d'un axe de pivotement au moins essentiellement horizontal.

10. Pont flottant selon la revendication 9, dans lequel le système comprend des moyens de commande qui sont configurés pour commander les moyens d'entraînement de manière à ce que, si la quantité d'électricité qui est générée ou qui est au moins sur le point d'être générée par une unité de turbine dépasse une valeur seuil spécifiée, l'unité de turbine pivote de sorte que la quantité d'électricité qui est générée par l'unité de turbine diminue.

11. Pont flottant selon l'une quelconque des revendications précédentes, dans lequel les au moins trois corps flottants font partie du cadre.

12. Pont flottant selon l'une quelconque des revendications précédentes, dans lequel le cadre a deux poutres qui s'étendent parallèlement l'une à l'autre dans la direction longitudinale de l'unité, lesquelles poutres sont reliées par les au moins trois corps flottants.

13. Pont flottant selon la revendication 12, dans lequel l'espacement entre les deux poutres parallèles est au moins approximativement identique à l'espacement entre deux corps flottants adjacents des au moins trois corps flottants, par conséquent un espace au moins approximativement carré, au moins vu de dessus, est défini entre les deux poutres respectives et lesdits deux corps flottants adjacents.

14. Pont flottant selon la revendication 12 ou 13, dans lequel les moyens de liaison sont reliés à une première poutre des deux poutres, de sorte que les unités de turbine puissent pivoter vers le haut autour de l'axe de pivotement horizontal susmentionné à une position inactive dans laquelle au moins le corps de rotor est situé dans un espace défini entre les deux poutres et les deux corps flottants adjacents.

15. Pont flottant selon l'une des revendications précédentes, dans lequel le pont comprend au moins une partie qui est prévue entre deux unités de la multitude d'unités et qui peut être ouverte de sorte qu'un passage pour des navires puisse être assuré, où l'au moins une partie est de préférence reliée en pivotement à une unité autour d'un axe de pivotement vertical.
